# EUROPÄISCHE PATENTSCHRIFT

(11) **EP 1 055 362 B1**
(45) Veröffentlichungstag und Bekanntmachung des Hinweises auf die Patenterteilung: **18.12.2002**
(21) Anmeldenummer: 00110682.2
(22) Anmeldetag: 19.05.2000
(51) Int. Cl.: A01D 61/02, F16G 3/06

(54) **Schneidwerk mit Fördergurt**
Cutting assembly with conveyor belt
Dispositif de coupe avec bande transporteuse

(30) Priorität: 27.05.1999 US 321368
(43) Veröffentlichungstag der Anmeldung: 29.11.2000
(73) Patentinhaber: DEERE & COMPANY, Moline, Illinois 61265-8098 (US)
(72) Erfinder: Watts, Bradley James, Eldridge, IA 52748 (US); Kmoch, David Walter, Geneseo, IL 61254 (US); Teller, Thomas G., Faribault, MN 55021 (US)
(74) Vertreter: Holst, Sönke, Dr.

(56) Entgegenhaltungen:
- DE-A- 3 420 179
- GB-A- 322 536
- US-A- 4 419 856
- US-A- 5 005 343

## Beschreibung

Die Erfindung betrifft ein Schneidwerk für eine Erntemaschine, mit einem Fördergurt, der zwei Endbereiche aufweist, welche durch einen Verbindungszusammenbau aneinander fixiert sind, der eine erste Verbindungsleiste und eine zweite Verbindungsleiste umfasst, wobei eine Schraube sowohl die erste Verbindungsleiste, eine Öffnung in jedem der Endbereiche und die zweite Verbindungsleiste durchdringt, und eine an der ersten Verbindungsleiste anliegende Mutter mit der Schraube verbunden ist.

Schneidwerke mit Fördergurten für Ernteausrüstungen haben einen oder mehrere flache, breite Gurte, die als Fördergurt, -band oder -tuch bezeichnet werden und zum Transport von Erntegut dienen. Die Anordnung und Anzahl der Fördergurte variiert bei unterschiedlichen Schneidwerken. Eine Art von Schneidwerk hat zwei seitliche Fördergurte, die Erntegut seitlich zur Mitte des Schneidwerks transportieren, wo ein mittiger Fördergurt das Erntegut in Längsrichtung in eine Erntemaschine transportiert. Die Fördergurte haben zwei Enden, die aneinander befestigt sind, um einen durchgehenden, endlosen Gurt zu bilden. An jedem Ende des Gurtes ist ein abstehendes Ende oder Flansch bereitgestellt. Diese Endbereiche des Gurtes sind durch einen Verbindungszusammenbau verbunden, um einen durchgehenden Gurt zu bilden. Der Verbindungszusammenbau dient als quer verlaufende Leiste, die zusammen mit anderen über die Länge des Fördergurtes verteilten Leisten zur Förderung von Erntegut in Förderrichtung wirkt.

Ein typischer Verbindungszusammenbau für die Gurtenden umfasst ein Paar hohler, quadratischer Rohre, die an jeder Seite der abstehenden Endbereiche des Gurtes angeordnet sind. Die Rohre haben eine Vielzahl von Öffnungen, die mit passenden Öffnungen in den abstehenden Endbereichen des Fördergurtes ausgerichtet sind. Schrauben sind durch die Verbindungsleisten und die Endbereiche des Fördergurtes gesteckt. Eine Mutter und eine oder mehrere Unterlegscheiben für die Muttern sind auf jeder Schraube angeordnet, um die Verbindungsleisten zu fixieren. Falls ein Fördergurt zur Wartungsarbeiten des Schneidwerks oder zum Ersatz eines abgenutzten Fördergurts zu entfernen ist, muss eine große Anzahl an Muttern und Schrauben entfernt werden. Zwei Schraubenschlüssel sind erforderlich, um jede Schraube zu entfernen oder anzubringen, einer für die Mutter und einer für den Kopf der Schraube. Dies hat einen zeitaufwendigen Vorgang zum Entfernen und Wiederverbinden eines Fördergurtes zum Ergebnis.

US-A-4419856 veröffentlicht ein Schneidwerk für eine Erntemaschine, mit einem Fördergurt,der zwei Endbereiche aufweist, welche aneinander fixiert sind.

Die der Erfindung zugrunde liegende Aufgabe wird darin gesehen, einen Verbindungszusammenbau für die Enden eines Fördergurtes eines Schneidwerks bereitzustellen, der schneller montier- und demontierbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Dadurch, dass die Schraube (oder die Schrauben) drehfest an der zweiten Verbindungsleiste angebracht sind, ist nur ein einziger Schraubenschlüssel zum Festziehen der Mutter auf der Schraube nötig. Die Schraube ist also auch im zerlegten Zustand des Verbindungszusammenbaus drehfest an der zweiten Verbindungsleiste angebracht. Vorzugsweise ist die Schraube dauerhaft an der zweiten Verbindungsleiste angebracht, d. h. nicht nur in azimutaler, sondern auch so in axialer Richtung gesichert, so dass sie bei der Montage nicht herausfallen kann. Es bietet sich aber an, sie - mit geeigneten Werkzeugen, wie einem Hammer - aus der zweiten Verbindungsleiste herausnehmbar oder herausschlagbar zu gestalten, damit sie beispielsweise im Fall eines defekten Gewindes ausgetauscht werden kann.

Auf diese Weise wird ein Verbindungszusammenbau für einen Fördergurt bereitgestellt, der weniger Werkzeuge zum Zusammenbauen erfordert.

Die Endbereiche stehen in der Regel vom Fördergurt ab, so dass der Verbindungszusammenbau als Förderleiste zum Transport des Ernteguts wirkt.

Die Verbindungsleisten sind vorzugsweise massiv. Dann kann die Schraube durch eine Pressverbindung an der Verbindungsleiste angebracht werden. Hohle, rohrförmige Verbindungsleisten sind prinzipiell zwar auch denkbar, sind aber weniger stabil.

Zur drehfesten Fixierung der Schraube an der Verbindungsleiste bietet sich an, sie mit einem Schaft zu versehen, der einen geriffelten Abschnitt aufweist. Der Abschnitt liegt an der Wandung einer entsprechenden Bohrung in der zweiten Leiste an, und sichert die Schraube gegen Drehung.

Weiterhin ist vorgeschlagen, eine selbstsichernde Mutter zu verwenden, um die bisher verwendeten Riffel- oder Wellenscheiben einzusparen.

Die Verbindungsleisten sind vorzugsweise rechteckförmig und weisen an der Basis der abstehenden Endbereiche des Fördergurtes eine abgerundete Ecke auf, so dass sich der Fördergut nicht daran abscheuern kann.

In den Zeichnungen ist ein nachfolgend näher beschriebenes Ausführungsbeispiel der Erfindung dargestellt. Es zeigt:
- Fig. 1: eine Seitenansicht eines Schneidwerks mit einem Fördergurt zur Verwendung an einem Mähdrescher;
- Fig. 2: eine Explosionszeichnung des Verbindungszusammenbaus der Fördergurtenden; und
- Fig. 3: eine Seitenansicht des zusammengesetzten Verbindungszusammenbaus.

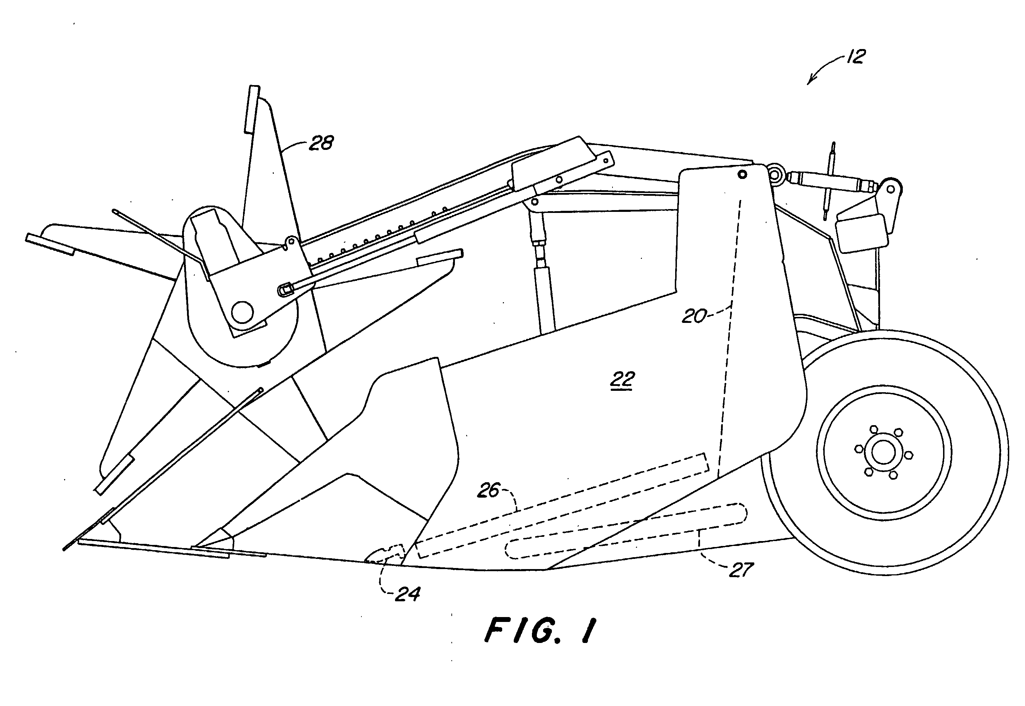

Die Erfindung ist in einem Schneidwerk 12 zur Getreideernte eines Mähdreschers, das in Figur 1 in Seitenansicht gezeigt ist, verwirklicht. Das Schneidwerk 12 kann in konventioneller Weise am Schrägförderer eines Mähdreschers befestigt werden und besteht aus einem im Grunde offenen Frontaufbau, der eine Rückwand 20, gegenüberliegende Seitenwände 22 und einen von der Rückwand 20 beabstandeten, vor ihr liegenden Mähwerksbalken 24 umfasst. Ein seitlicher Fördergurt oder mehrere seitliche Fördergurte 26 sind zwischen dem Mähwerksbalken 24 und der Rückwand 20 angeordnet, um Material zu fördern. Die seitlichen Fördergurte 26 bewegen das Erntegut seitlich über das Schneidwerk 12 zu einem mittigen Fördergurt 27, der das Erntegut in seiner Längsrichtung durch eine Öffnung in der Rückwand 20 und in den Schrägförderer des Mähdreschers fördert. Die dargestellte Anordnung der Fördergurte 26, 27 ist nur ein Beispiel für die vielen Fördergurt-Anordnungen, die verwendet werden können. Eine Haspel 28 dreht sich oberhalb des Mähwerksbalkens 24, um das Erntegut gegen den Mähwerksbalken 24 zu drücken und das Erntegut auf die Fördergurte zu bewegen.

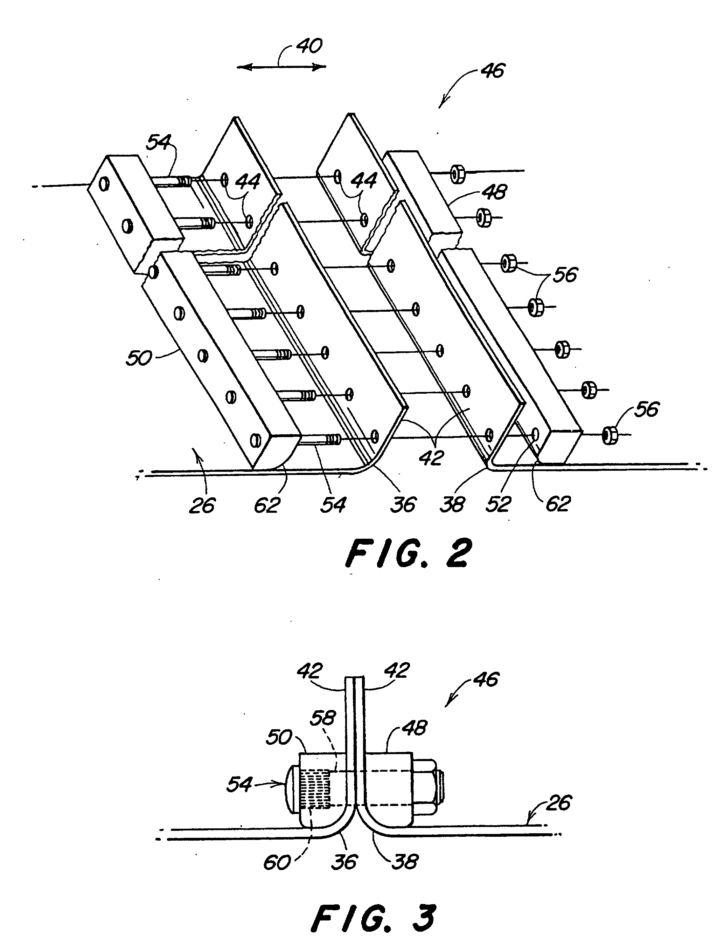

Die Fördergurte 26, 27 sind weite, flache Bänder, wie sie in Figur 2 dargestellt sind. Die seitlichen Fördergurte 26 und der mittige Fördergurt 27 sind im wesentlichen gleichartig, unterscheiden sich nur in Breite und Länge. Die Fördergurte haben gegenüberliegende Enden 36, 38, die aneinander befestigt sind, um einen durchgängigen (endlosen) Gurt zu schaffen. Jeder Fördergurt 26, 27 wird über Walzen (nicht gezeigt) in einer durch den Pfeil 40 gekennzeichneten Förderrichtung bewegt. Jeder Fördergurt 26, 27 hat einen abstehenden Endbereich 42. Die beiden Endbereiche 42 haben jeweils eine Reihe an Öffnungen, die sich überdecken, wenn die Enden 36, 38 der Fördergurte 26, 27 zusammengebracht werden.

Die Enden 36, 38 werden durch einen Verbindungszusammenbau 46 zusammengehalten. Der Verbindungszusammenbau 46 umfasst eine erste Verbindungsleiste 48 und eine zweite Verbindungsleiste 50. Die Verbindungsleisten 48, 50 sind feste Leisten, vorzugsweise aus Metall, und können durch Extrusion hergestellt werden. Andere Materialien, einschließlich Kunststoff, können für die Verbindungsleisten verwendet werden. Die erste Verbindungsleiste 48 ist mit einer Reihe durchgehender Bohrungen 52 versehen, die mit den Öffnungen 44 in den Endbereichen 42 ausgerichtet sind.

Die zweite Verbindungsleiste 50 weist eine Vielzahl daran befestigter, mit Gewinden versehener (Stift-) Schrauben 54 auf. Die Schrauben 54 erstrecken sich durch die Öffnungen 44 in den Endbereichen 42 der Gurte 26, 27 und durch die Bohrungen 52 in der ersten Verbindungsleiste 48. Selbstsichernde Muttern 56 sind auf die äußeren Enden der Schrauben 54 beschraubt, um die Verbindungsleisten und die abstehenden Endbereiche 42 zusammenzuhalten.

Die Schrauben 54 haben einen Schaft 58, von dem ein Abschnitt 60 geriffelt ist, so dass er griffig mit der zweiten Verbindungsleiste 50 verbunden ist, um die Schrauben 54 fest an Ort und Stelle zu halten. Die Schrauben 54 sind in die zweite Verbindungsleiste 50 hineingepresst und dadurch darin fixiert. Die dauerhaft fixierten Schrauben 54 erübrigen separate Bolzen, die manuell gehandhabt werden müssen, um sie durch beide Verbindungsleisten 48, 50 zu stecken. Der Verbindungszusammenbau besteht daher aus weniger separaten Komponenten als frühere Verbindungszusammenbauten. Außerdem werden Federringe oder Zahnscheiben zur Sicherung der Muttern 56 nicht mehr benötigt, da sie selbstsichernd sind, was die Anzahl der zusammenzusetzenden Komponenten des Verbindungszusammenbaus weiter vermindert. Die Befestigung der Schrauben 54 an der zweiten Befestigungsleiste 50 erübrigt außerdem die Notwendigkeit, einen zweiten Schraubenschlüssel zum Halten des Kopfes der Schraube 54 zu verwenden. Im Ergebnis ist das Zusammensetzen und Demontieren des erfindungsgemäßen Verbindungszusammenbaus im Vergleich mit anderen Verbindungszusammenbauten wesentlich vereinfacht, die separate Schrauben, Muttern und Unterlegscheiben für die Muttern aufweisen.

Wie anhand der Figur 2 erkennbar ist, haben die Verbindungsleisten 48, 50 eine im wesentlichen rechteckförmige Form. Die Ecke 62 jeder Verbindungsleiste 48, 50 greift an der Basis des Endbereiches 42 am Fördergurt 26, 27 an. Diese Ecke 62 ist stärker abgerundet als die anderen Ecken der Verbindungsleisten 48, 50. Dadurch wird eine Entlastung für den Fördergurt 26, 27 bereitgestellt, wenn der Verbindungszusammenbau die Walzen umrundet, die den Fördergurt 26, 27 tragen. Wenn er vollständig zusammengebaut ist, bildet der Verbindungszusammenbau eine von der flachen Oberfläche des Fördergurtes 26, 27 abstehende Leiste. Diese Leiste unterstützt gemeinsam mit anderen Klammern (nicht gezeigt) das Fördern von Erntegut, die normalerweise auf dem Fördergut 26, 27 angeordnet sind. Der dargestellte Verbindungszusammenbau wird auch am mittigen Fördergurt 27 verwendet.

## Patentansprüche

1. Schneidwerk (12) für eine Erntemaschine, mit einem Fördergurt (26, 27), der zwei Endbereiche (42) aufweist, welche durch einen Verbindungszusammenbau aneinander fixiert sind, der eine erste Verbindungsleiste (48) und eine zweite Verbindungsleiste (50) umfasst, wobei eine Schraube (54) sowohl die erste Verbindungsleiste (48), eine Öffnung (44) in jedem der Endbereiche (42) und die zweite Verbindungsleiste (50) durchdringt, und eine an der ersten Verbindungsleiste (48) anliegende Mutter (56) mit der Schraube (54) verbunden ist, **dadurch gekennzeichnet, dass** die Schraube (54) an der zweiten Verbindungsleiste (50) drehfest befestigt ist.

2. Schneidwerk nach Anspruch 1, **dadurch gekennzeichnet, dass** die Schraube (54) dauerhaft an der zweiten Verbindungsleiste (50) befestigt ist.

3. Schneidwerk (12) nach Anspruch 1 oder 2, **dadurch gekennzeichnet, dass** die Endbereiche (42) vom Fördergurt (26, 27) abstehen.

4. Schneidwerk (12) nach einem der Ansprüche 1 bis 3, **dadurch gekennzeichnet, dass** die erste Verbindungsleiste (48) und/oder die zweite Verbindungsleiste (50) massiv sind.

5. Schneidwerk (12) nach einem der Ansprüche 1 bis 4, **dadurch gekennzeichnet, dass** die Schraube (54) an der zweiten Verbindungsleiste (50) durch eine Pressverbindung befestigt ist.

6. Schneidwerk (12) nach einem der vorhergehenden Ansprüche, **dadurch gekennzeichnet, dass** die Schraube (54) einen Schaft (58) mit einem geriffelten Abschnitt (60) aufweist.

7. Schneidwerk (12) nach einem der vorhergehenden Ansprüche,
**dadurch gekennzeichnet, dass** die Muttern (56) selbstsichernd sind.

8. Schneidwerk (12) nach einem der Ansprüche 3 bis 7, **dadurch gekennzeichnet, dass** die Verbindungsleisten (48, 50) rechteckförmig sind und an der Basis der abstehenden Endbereiche (42) des Fördergurts (26, 27) eine abgerundete Ecke (62) aufweisen.

9. Schneidwerk (12) nach einem der vorhergehenden Ansprüche, **gekennzeichnet durch** mehrere Schrauben (54) und Muttern (56).

10. Schneidwerk (12) nach einem der vorhergehenden Ansprüche, **dadurch gekennzeichnet, dass** die Verbindungsleisten (48, 50) aus Metall sind.

## Claims

1. A cutter-head (12) for a harvesting machine, with a conveyor belt (26, 27) which has two end regions which are fixed to one another by a connector assembly, which comprises a first connecting bar (48) and a second connecting bar (50), wherein a screw (54) passes through both the first connecting bar (48), an opening (44) in each of the end regions (42) and the second connecting bar (50), and a nut (56) bearing on the first connecting bar (48) is coupled to the screw (54), **characterized in that** the screw (54) is fixed rotationally fast on the second connecting bar (50).

2. A cutter-head according to claim 1, **characterized in that** the screw (54) is fixed permanently on the second connecting bar (50).

3. A cutter-head (12) according to claim 1 or 2, **characterized in that** the end regions stand out from the conveyor belt (26, 27).

4. A cutter-head (12) according to any of claims I to 3, **characterized in that** the first connecting bar (48) and/or the second connecting bar (50) are solid.

5. A cutter-head (12) according to any of claims 1 to 4, **characterized in that** the screw (54) is fixed on the second connecting bar (50) by a press fit connection.

6. A cutter-head (12) according to any of the preceding claims, **characterized in that** the screw (54) has a shank (58) with a serrated section (60).

7. A cutter-head (12) according to any of the preceding claims, **characterized in that** the nuts (56) are self-locking.

8. A cutter-head (12) according to any of claims 3 to 7, **characterized in that** the connecting bars (48, 50) are rectangular and have a rounded corner (62) at the base of the out-standing end region (42) of the conveyor belt (26, 27).

9. A cutter-head (12) according to any of the preceding claims, **characterized by** a plurality of screws (54) and nuts (56).

10. A cutter-head (12) according to any of the preceding claims, **characterized in that** the connecting bars (48, 50) are of metal.

## Revendications

1. Barre de coupe (12) pour une moissonneuse avec une bande transporteuse (26, 27), qui présente deux zones d'extrémité (42), lesquelles sont fixées l'une à l'autre par un ensemble de liaison, qui comprend une première barre de liaison (48) et une deuxième barre de liaison (50), une vis (54) traversant aussi bien la première barre de liaison (48), une ouverture (44) dans chacune des zones d'extrémité (42) et la deuxième barre de liaison (50), et un écrou (56) contigu à la première barre de liaison (48) étant relié à la vis (54), **caractérisée en ce que** la vis (54) est fixée solidaire en rotation sur la deuxième barre de liaison (50).

2. Barre de coupe selon la revendication 1, **caractérisée en ce que** la vis (54) est fixée de façon permanente sur la deuxième barre de liaison (50).

3. Barre de coupe (12) selon la revendication 1 ou 2, **caractérisée en ce que** les zone d'extrémité (42) dépassent de la bande transporteuse (26, 27).

4. Barre de coupe (12) selon l'une quelconque des revendications 1 à 3, **caractérisée en ce que** la première barre de liaison (48) et/ou la deuxième barre de liaison (50) sont massives.

5. Barre de coupe (12) selon l'une quelconque des revendications 1 à 4, **caractérisée en ce que** la vis (54) est fixée sur la deuxième barre de liaison (50) par un emmanchement.

6. Barre de coupe (12) selon l'une quelconque des revendications précédentes, **caractérisée en ce que** la vis (54) présente une tige (58) avec une partie (60) cannelée.

7. Barre de coupe (12) selon l'une quelconque des revendications précédentes, **caractérisée en ce que** les écrous (56) sont autobloquants.

8. Barre de coupe (12) selon l'une quelconque des revendications 3 à 7, **caractérisée en ce que** les barres de liaison (48, 50) sont de forme rectangulaire et présentent un angle (62) arrondi sur la base des zones d'extrémité (42) saillantes de la bande transporteuse (26, 27).

9. Barre de coupe (12) selon l'une quelconque des revendications précédentes, **caractérisée par** plusieurs vis (54) et écrous (56).

10. Barre de coupe (12) selon l'une quelconque des revendications précédentes, **caractérisée en ce que** les barres de liaison (48, 50) sont en métal.
